# EUROPÄISCHE PATENTANMELDUNG

(11) **EP 4 835 399 A1**
(43) Veröffentlichungstag der Anmeldung: **04.11.2026**
(21) Anmeldenummer: 26173383.6
(22) Anmeldetag: 20.04.2026
(51) Int. Cl.: G01B 11/24, G01B 11/245, G01B 21/04

(54) **VERFAHREN UND VORRICHTUNG ZUM MESSEN EINES WERKSTÜCKS MIT SELEKTIEREN VON MESSDATEN EINES ABSTANDSSENSORS**

(30) Priorität: 29.04.2025 DE 102025001490
(71) Anmelder: JENOPTIK Optical Systems GmbH, 07745 Jena (DE)
(72) Erfinder: Jacob, Lutz, 07745 Jena (DE); Schubert, Michael, 07745 Jena (DE); Miao, Yushan, 07745 Jena (DE)
(74) Vertreter: Waldauf, Alexander

(57) **Zusammenfassung**

Verfahren zum Messen von mindestens einem Merkmal von Form, Lage oder Dimension eines drehbar eingespannten Werkstücks, umfassend:
Aufnehmen von Messwerten zum Generieren eines ersten Datensatzes, der das mindestens eine Merkmal von Form, Lage oder Dimension des Werkstücks beschreibt, umfassend:
• Bereitstellen eines Abstandssensors in einer Abstandssensorposition und einem Abstandssensorwinkel;
• Auslesen von Messdaten des Abstandssensors zum Bestimmen des Abstands zwischen dem Abstandssensor und einer Oberflächenposition auf der Oberfläche des Werkstücks;
• Bestimmen des Abstands zwischen dem Abstandssensor und der Oberflächenposition aus den Messdaten;
• Berechnen eines Koordinatensatzes der Oberflächenposition aus dem Abstand, der Abstandssensorposition und dem Abstandssensorwinkel;
• Generieren des ersten Datensatzes aus dem Koordinatensatz der Oberflächenposition;

dadurch gekennzeichnet, dass das Bestimmen des Abstands folgende Schritte umfasst:
• Prüfen der Messdaten auf ein Vorliegen einer Mehrdeutigkeit des Bestimmens des Abstands, wobei bei Vorliegen der Mehrdeutigkeit mehrere mögliche Abstandswerte (D1, D2) des Abstands bestimmbar sind,
• Bestimmen eines eindeutig bestimmbaren Abstandswerts (D0) sowie Selektieren des eindeutig bestimmbaren Abstandswerts (D0) als den Abstand oder Bestimmen von mehreren möglichen Abstandswerten (D1, D2) sowie Selektieren des möglichen Abstandswerts (D1), der am nächsten bei einem Sollwert (DS) liegt, als den Abstand.

## Beschreibung

Die Erfindung betrifft ein Verfahren und eine Vorrichtung zum Messen von Form, Lage oder Dimension eines Werkstücks, insbesondere von rotierbaren Maschinenelementen, wie beispielsweise Motor- und Getriebewellen, Schubstangen, Ventilen, Kolben, Schrauben, Turbinenteilen etc.

### Stand der Technik

Für eine genaue Messung von wellenartigen Werkstücken haben sich taktile Messverfahren etabliert, bei denen Flächen mit mechanischen Tastelementen angetastet und sehr genau gemessen werden können. Ebenso werden kontaktlose Messverfahren zur Abstandsmessung verwendet, beispielsweise optische Abstandssensoren.

Zur Ergänzung bieten sich optische Messverfahren an, bei denen ein Schattenbild des Werkstücks erzeugt wird, an dem der äußere Umriss gemessen werden kann. Aufgrund der berührungslosen Messung kann das Werkstück schnell erfasst und hochgenau vermessen werden. Ein Wechsel zwischen verschiedenen Messaufgaben ist einfach und schnell möglich. Ein Nachteil des Schattenbilds ist, dass beispielsweise konkave Teilflächen und Hinterschneidungen, die im Schattenbild nicht sichtbar sind, nicht gemessen werden können.

Daher bietet es sich an, das Messverfahren mit Abstandsmessung mittels eines Abstandssensors und das Messverfahren mit Schattenbild zu kombinieren. Durch Rotieren des wellenartigen Werkstücks um seine Längsachse und wiederholtes Abstandsmessen und Aufnehmen von Schattenbildern lassen sich seine Form und Abmessungen komplett erfassen.

In der Patentschrift DE 10 2012 104 008 B3 ist eine Vorrichtung zum Messen von Form und Abmessungen eines rotierbaren wellenartigen Werkstücks offenbart, in der das Messverfahren mit Schattenbild und das Messverfahren mit Abstandsmessung mittels eines Abstandssensors kombiniert ausführbar sind. Die Vorrichtung enthält ein Maschinenbett mit einer entlang des Maschinenbetts angeordneten Linearführung und einem parallel dazu angeordneten Linearführungssystem, eine Werkstückhalterung zur drehbaren Aufnahme des Werkstücks und eine optische Messeinheit mit einem Beleuchtungsmodul und einem Kameramodul zur Aufnahme von Schattenbildern des Werkstücks. Außerdem enthält die Vorrichtung eine zusätzliche mechanische Messeinheit mit einem taktilen Abstandssensor, wobei die mechanische Messeinheit an der optischen Messeinheit fixiert ist und eine Schwenkeinrichtung zum Einschwenken des taktilen Abstandssensor in einer Orthogonalebene zur Rotationsachse des Werkstücks aufweist.

In der Patentanmeldung WO 2022/053929 ist ebenfalls eine Vorrichtung zum Messen von Form und Abmessungen eines rotierbaren wellenartigen Werkstücks offenbart, in der das Messverfahren mit Schattenbild und das Messverfahren mit Abstandsmessung mittels eines Abstandssensors kombiniert ausführbar sind. Der Abstandssensor ist hier als optischer Abstandssensor ausgebildet. Der Abstandssensor ist verschiebbar und rotierbar an einer Halterung angebracht. So kann der Abstandssensor in einen geeigneten Winkelbereich zur Oberfläche eines zu messenden Bereichs des Werkstücks ausgerichtet werden, beispielsweise auf die Flanken eines Zahns eines Zahnrads.

Bekannt sind optische Abstandssensoren nach dem CCS-Prinzip, d.h. konfokale chromatische Sensoren. Das Prinzip basiert auf der Dispersion des Mediums von Linsen. Eine Oberflächenposition des Werkstücks, deren Abstand zum Abstandssensor gemessen werden soll, wird mit Licht mit breitem Spektrum beleuchtet. Die Oberflächenposition wird konfokal auf einen Spektrometersensor abgebildet, der das Spektrum der abgebildeten Oberflächenposition misst. Die Brennweite eines zur Abbildung verwendeten Linsensystems hängt von der Wellenlänge des Lichts ab. Daher kann der Abstand zwischen der Oberflächenposition und dem Abstandssensor aus dem Spektrum der abgebildeten Oberflächenposition berechnet werden.

Ebenso bekannt sind optische Laufzeit-Abstandssensoren, die die Laufzeit des Lichts von dem Abstandssensor zu der Oberflächenposition und zurück messen und daraus den Abstand zwischen der Oberflächenposition und dem Abstandssensor berechnen.

### Nachteile des Stands der Technik

Die Verwendung eines optischen Abstandssensors ist gegenüber einem taktilen Abstandssensor vorteilhaft, wenn die Messzeit kurz sein soll und die Oberfläche des Werkstücks nicht mechanisch berührt werden soll. Bei einem optischen Abstandssensor wird die Weglänge gemessen, die ein Messstrahl vom Abstandssensor zum Werkstück und nach Reflexion am Werkstück zurück zum Abstandssensor zurücklegt. Hierbei können jedoch Mehrfachreflexionen am Werkstück auftreten, die die gemessene Weglänge und somit das Ergebnis der Abstandsmessung uneindeutig oder unzuverlässig werden lassen. Die aus dem Stand der Technik bekannten Verfahren zum Messen von Form, Lage oder Dimension eines rotierbaren Werkstücks offenbaren keine Verfahrensschritte, wie mit diesen Mehrfachreflexionen zu verfahren ist, um eine hohe Zuverlässigkeit der Abstandsmessung zu erhalten. Somit sind die gemessenen Daten von Form, Lage oder Dimension des Werkstücks nicht zuverlässig.

### Aufgabe der Erfindung

Es ist daher Aufgabe der Erfindung, ein Verfahren zum Messen von Form, Lage oder Dimension eines Werkstücks bereitzustellen, das ein eindeutiges Ergebnis der Abstandsmessung mit dem Abstandssensor ergibt. Somit soll ein zuverlässiger Datensatz von Form, Lage oder Dimension des Werkstücks erzeugt werden.

### Erfindungsgemäße Lösung

Die Aufgabe der Erfindung wird mit einem Verfahren gemäß Anspruch 1 gelöst.

### Beschreibung

Das erfindungsgemäße Verfahren zum Messen von mindestens einem Merkmal von Form, Lage oder Dimension eines drehbar eingespannten Werkstücks umfasst ein Aufnehmen von Messwerten zum Generieren eines ersten Datensatzes, der das mindestens eine Merkmal von Form, Lage oder Dimension des Werkstücks beschreibt,
wobei das Aufnehmen von Messwerten umfasst:
   - Bereitstellen eines Abstandssensors in einer Abstandssensorposition und einem Abstandssensorwinkel;
   - Auslesen von Messdaten des Abstandssensors zum Bestimmen des Abstands zwischen dem Abstandssensor und einer Oberflächenposition auf der Oberfläche des Werkstücks;
   - Bestimmen des Abstands zwischen dem Abstandssensor und der Oberflächenposition aus den Messdaten;
   - Berechnen eines Koordinatensatzes der Oberflächenposition aus dem Abstand, der Abstandssensorposition und dem Abstandssensorwinkel;
   - Generieren des ersten Datensatzes aus dem Koordinatensatz der Oberflächenposition;
wobei das Bestimmen des Abstands folgende Schritte umfasst:
   - Prüfen der Messdaten auf ein Vorliegen einer Mehrdeutigkeit des Bestimmens des Abstands, wobei bei Vorliegen der Mehrdeutigkeit mehrere mögliche Abstandswerte des Abstands bestimmbar sind,
   - Bestimmen eines eindeutig bestimmbaren Abstandswerts sowie Selektieren des eindeutig bestimmbaren Abstandswerts als den Abstand
      oder
      Bestimmen von mehreren möglichen Abstandswerten sowie Selektieren des möglichen Abstandswerts, der am nächsten bei einem Sollwert liegt, als den Abstand.

Der Abstandssensor kann mit einer Steuereinheit zum Auslesen von Messdaten gesteuert werden.

Das mindestens eine Merkmal von Form, Lage oder Dimension des Werkstücks kann insbesondere ein quantitatives Merkmal sein. Das mindestens eine Merkmal kann beispielsweise ein Durchmesser des Werkstücks oder eine Koordinate eines Zahns eines Zahnrads, das auf einer Welle des Werkstücks angebracht ist, sein. Das Werkstück kann insbesondere ein wellenartiges Werkstück sein.

Im erfindungsgemäßen Verfahren wird geprüft, ob der Abstand zwischen der Oberflächenposition und dem Abstandssensor eindeutig bestimmbar ist, d.h. ob eine Mehrdeutigkeit der Bestimmung des Abstands vorliegt. Wenn der Abstand eindeutig bestimmbar ist, wird nur ein eindeutig bestimmbarer Abstandswert bestimmt. Der eindeutig bestimmbare Abstandswert wird als Abstand zwischen der Oberflächenposition und dem Abstandssensor selektiert. Dagegen sind bei Vorliegen der Mehrdeutigkeit mehrere mögliche Abstandswerte bestimmbar. Beim Selektieren wird derjenige mögliche Abstandswert als Abstand selektiert, der am nächsten bei einem Sollwert liegt.

Der Sollwert kann aus Solldaten des Werkstücks, der Abstandssensorposition und dem Abstandssensorwinkel bestimmt werden.

Im erfindungsgemäßen Verfahren können die Messdaten als Folge von Messwerten vorliegen, wobei die Folge von Messwerten ein lokales Extremum oder mehrere lokale Extrema aufweist, wobei bei Aufweisen mehrerer lokaler Extrema die Mehrdeutigkeit der Bestimmung des Abstands vorliegt, wobei aus dem lokalen Extremum der eindeutig bestimmbare Abstandswert bestimmbar ist oder aus den mehreren lokalen Extrema die mehreren möglichen Abstandswerte bestimmbar sind.

Im erfindungsgemäßen Verfahren werden beim Vorliegen der Mehrdeutigkeit die mehreren möglichen Abstandswerte mit einem Sollwert des Abstands zwischen der Oberflächenposition und dem Abstandssensor verglichen. Der Sollwert des Abstands kann unter Berücksichtigen von Solldaten des Werkstücks berechnet werden, insbesondere unter Berücksichtigen von Konstruktionsdaten des Werkstücks. Aus den Solldaten des Werkstücks, beispielsweise in Form von CAD-Daten, ist die Soll-Position der Oberflächenposition berechenbar. Es ist davon auszugehen, dass die tatsächliche Position der Oberflächenposition nur geringfügig von der Soll-Position abweicht. Daher lässt sich aus den Solldaten des Werkstücks, der Abstandssensorposition und dem Abstandssensorwinkel des Abstandssensors der Sollwert des Abstands zwischen der Oberflächenposition und dem Abstandssensor berechnen.

Der Sollwert des Abstands zu der Oberflächenposition kann auch aus einem Mittelwert von Koordinatensätzen von weiteren Oberflächenpositionen, die benachbart zu der Oberflächenposition sind, bestimmt werden, wobei die Abstandssensorposition und der Abstandssensorwinkel in das Bestimmen des Sollwerts des Abstands eingehen.

Der Abstandssensor kann die Messdaten als Folge von Messwerten ausgeben, aus denen der Abstand bestimmbar ist. Insbesondere kann der Abstand aus einem Extremum der Folge von Messdaten als ein eindeutig bestimmbarer Abstandswert bestimmbar sein, d.h. aus einem Maximum oder einem Minimum der Folge von Messwerten. Bei Vorliegen einer Mehrdeutigkeit beim Bestimmen des Abstands weist die Folge von Messwerten mehrere lokale Extrema auf, d.h. mehrere lokale Maxima oder mehrere lokale Minima. Aus den mehreren lokalen Extrema sind mehrere mögliche Abstandswerte bestimmbar, von denen derjenige mögliche Abstandswert als Abstand selektiert wird, der am nächsten bei dem Sollwert des Abstands liegt.

Die Folge von Messwerten kann mehrere lokale Extrema aufweisen, wenn durch Mehrfachreflexionen des vom Abstandssensor ausgehenden Lichts an dem Werkstück das Licht auf unterschiedlichen Pfaden zurück zum Abstandssensor gelangt und diese unterschiedlichen Pfade unterschiedliche optische Weglängen aufweisen. In diesem Fall liegt eine Mehrdeutigkeit beim Bestimmen des Abstands vor.

Im erfindungsgemäßen Verfahren kann der Abstandssensor eine kontaktlose Messung des Abstands, insbesondere eine optische Messung des Abstands, ausführen. Der Abstandssensor zum Ausführen der kontaktlosen Messung des Abstands kann ein konfokaler chromatischer Sensor sein. Der Abstandssensor zum Ausführen der kontaktlosen Messung des Abstands kann ein optischer Laufzeit-Abstandssensor sein.

Im erfindungsgemäßen Verfahren kann der Abstandssensor eine kontaktlose Messung des Abstands, insbesondere eine optische Messung des Abstands, ausführen. Eine optische Messung des Abstands kann nach dem CCS-Prinzip erfolgen, d.h. nach dem Prinzip eines konfokalen chromatischen Abstandssensors. Ein konfokaler chromatischer Abstandssensor nach dem CCS-Prinzip ist vorteilhaft aufgrund der hohen Genauigkeit, kurzen Messzeit und geringen Größe des Abstandssensors. Eine optische Messung des Abstands kann auch über eine Laufzeitmessung des Lichts erfolgen. Eine optische Messung kann auch mit einem Laserentfernungsmesser erfolgen. Dabei kann der Abstand aus einer Verschiebung der Phasenlage einer Amplitudenmodulation der Laserstrahlung zwischen dem ausgesendeten und empfangenen Laserstrahl bestimmt werden, um eine bessere Auflösung zu erreichen. Eine kontaktlose Messung des Abstands kann auch über Messung der Laufzeit eines Schallsignals oder über einen Druckluftpuls erfolgen. Im letzteren Fall kann ein gemessener Staudruck in einen Abstand umgerechnet werden.

Bei einem optischen Abstandssensor nach dem CCS-Prinzip wird die Oberflächenposition konfokal auf einen Spektrometersensor abgebildet, der das Spektrum der abgebildeten Oberflächenposition misst. Die Messdaten werden als Folge von Messwerten des Spektrums ausgegeben. Die Folge von Messwerten des Spektrums weist ein lokales Extremum oder mehrere lokale Extrema auf, aus denen der Abstand bestimmbar ist. Bei Vorliegen einer Mehrdeutigkeit beim Bestimmen des Abstands weist die Folge von Messwerten des Spektrums mehrere lokale Extrema auf. Die Mehrdeutigkeit kann durch Mehrfachreflexionen des Lichts an dem Werkstück und unterschiedliche optische Weglängen der unterschiedlichen Pfade verursacht werden. Aus den mehreren lokalen Extrema sind mehrere mögliche Abstandswerte bestimmbar, von denen im erfindungsgemäßen Verfahren derjenige mögliche Abstandswert als Abstand selektiert wird, der am nächsten bei dem Sollwert liegt.

Eine Mehrdeutigkeit beim Bestimmen des Abstands kann auch bei Verwenden anderer Abstandssensoren auftreten, beispielsweise bei einem Abstandssensor, der eine Laufzeitmessung des Lichts verwendet. Das erfindungsgemäße Verfahren kann auch bei anderen Abstandssensoren angewendet werden.

Das erfindungsgemäße Verfahren kann zusätzlich ein Beleuchten des Werkstücks mit einer Beleuchtungseinheit und ein Aufnehmen eines Schattenbilds des Werkstücks mit einer Sensoreinheit umfassen. Die Sensoreinheit, beispielsweise eine flächige CCD-Kamera oder eine Zeilenkamera, befindet sich auf der Seite des Werkstücks, die gegenüber der Beleuchtungseinheit liegt. Vorteilhaft kann die Beleuchtung mit parallelem Licht erfolgen. Dann kann ein besonders genaues Schattenbild aufgenommen werden. Alternativ kann die Beleuchtung mit einer Punklichtquelle erfolgen. Dann kann das Schattenbild abhängig von der Position der Beleuchtungseinheit und der Aufnahmeebene der Sensoreinheit sein.

Während des Beleuchtens des Werkstücks mit der Beleuchtungseinheit kann das erzeugte Schattenbild des Werkstücks mit der Sensoreinheit in einer Aufnahme aufgenommen werden. Aus dieser Aufnahme kann ein zweiter Datensatz generiert werden. Der zweite Datensatz kann mindestens ein Merkmal von Form, Lage oder Dimension des Werkstücks umfassen, beispielsweise einen Durchmesser des Werkstücks. Der erste Datensatz und der zweite Datensatz können zu einem dritten Datensatz kombiniert werden, wobei der dritte Datensatz das mindestens eine Merkmal von Form, Lage oder Dimension des Werkstücks beschreibt.

Im erfindungsgemäßen Verfahren kann der erste Datensatz insbesondere mindestens ein Merkmal über Form, Lage oder Dimension des Werkstücks enthalten, das in dem aus dem mindestens einen Schattenbild generierten zweiten Datensatz nicht enthalten ist. Dies kann ein Merkmal über Form, Lage oder Dimension von konkaven Teilflächen und/oder Hinterschneidungen sein.

Anhand einer Referenzposition kann im erfindungsgemäßen Verfahren ein Abgleich eines ersten Koordinatensystems des Abstandssensors und eines zweiten Koordinatensystems der Sensoreinheit erfolgen. Die Referenzposition ist eine Oberflächenposition auf der Oberfläche des Werkstücks, deren Koordinatensatz unter Verwendung sowohl des Abstandssensors als auch der Sensoreinheit bestimmbar ist. Die Referenzposition kann beispielsweise eine an dem Werkstück angebrachte Spitze oder eine Oberflächenposition auf einem an dem Werkstück angebrachten Ring sein. Die Referenzposition kann als die Oberflächenposition selektiert werden, und die Referenzposition kann als Schattenbild von der Sensoreinheit aufgenommenen werden. Der erste Datensatz kann unter Verwendung des Abstandssensors im erfindungsgemäßen Verfahren generiert werden, wobei der erste Datensatz einen Koordinatensatz der Referenzposition im ersten Koordinatensystem enthält. Der zweite Datensatz kann unter Verwendung der Sensoreinheit im erfindungsgemäßen Verfahren generiert werden, wobei der zweite Datensatz einen Koordinatensatz der Referenzposition im zweiten Koordinatensystem enthält. Aus der Kombination des ersten Datensatzes und des zweiten Datensatzes im dritten Datensatz kann somit eine Relation von Abstandssensor und Sensoreinheit berechnet werden. Diese Relation kann beispielsweise ein Versatz und/oder eine Verdrehung zwischen dem ersten Koordinatensystem und dem zweiten Koordinatensystem sein.

Der Abstandssensor kann auf einen Träger angebracht sein. Der Abstandssensor kann statisch auf dem Träger angebracht sein. Optional kann der Abstandssensor auf einer Verschiebe- und Dreheinheit angebracht sein und mit einer Steuereinheit verschiebbar und/oder drehbar in eine Abstandssensorposition und einen Abstandssensorwinkel gesteuert werden. Die optionale Beleuchtungseinheit und die optionale Sensoreinheit können einander gegenüberliegend ebenfalls auf diesem Träger angebracht sein. Der Träger kann U-förmig sein und das Werkstück umgreifen.

Im erfindungsgemäßen Verfahren kann das Werkstück um eine Drehachse gedreht werden. Bei einem wellenartigen Werkstück ist die Drehachse vorteilhafterweise entlang der langen Richtung des wellenartigen Werkstücks. Ebenso kann der Abstandssensor in einer Richtung entlang der Drehachse verschoben werden. Ebenso können die Beleuchtungseinheit und/oder die Sensoreinheit in einer Richtung entlang der Drehachse verschoben werden. Dadurch können weitere Merkmale von Form, Lage oder Dimension des Werkstücks gemessen werden.

Auf einer Steuereinheit, die als Steuer- und Auswerteeinheit ausgebildet sein kann, und/oder einem Computer kann erfolgen:
- ein Steuern des Abstandssensors mit einer Steuereinheit zum Auslesen von Messdaten,
- ein Aufnehmen, Auslesen und/oder Verarbeiten von Messdaten des Abstandssensors,
- das Bestimmen des Abstands zwischen dem Abstandssensor und der Oberflächenposition aus den Messdaten,
- das Berechnen des Koordinatensatzes der Oberflächenposition aus dem Abstand, der Abstandssensorposition und dem Abstandssensorwinkel,
- das Generieren des ersten Datensatzes aus dem Koordinatensatz der Oberflächenposition,
- das Prüfen der Messdaten auf ein Vorliegen einer Mehrdeutigkeit des Bestimmens des Abstands,
- das Bestimmen des eindeutig bestimmbaren Abstandswerts oder der mehreren möglichen Abstandswerte,
- das Selektieren des eindeutig bestimmbaren Abstandswerts oder des möglichen Abstandswerts als den Abstand,
- und/oder das Generieren des zweiten Datensatzes aus dem mindestens einfachen Aufnehmen des Schattenbilds,
- und/oder das Kombinieren des ersten Datensatzes und des zweiten Datensatzes zu dem dritten Datensatz.

Eine erfindungsgemäße Vorrichtung zum Messen von mindestens einem Merkmal von Form, Lage oder Dimension eines drehbar eingespannten Werkstücks umfasst einen Abstandssensor und eine Steuereinheit, auf der das erfindungsgemäße Verfahren ausführbar ist. Der Abstandssensor kann verschiebbar und/oder drehbar sein. Die erfindungsgemäße Vorrichtung kann eine Beleuchtungseinheit und eine Sensoreinheit umfassen.

### Figuren

Nachfolgend wird die Erfindung anhand von Ausführungsbeispielen näher erläutert. Die Figuren zeigen:
Fig. 1 eine Vorrichtung zum Messen von Form, Lage oder Dimension des Werkstücks, auf der das erfindungsgemäße Verfahren ausführbar ist;
Fig. 2 eine Ansicht des Abstandssensors;
Fig. 3 eine Ansicht des Abstandssensors und des Werkstücks sowie ein Vorliegen einer Mehrdeutigkeit beim Bestimmen des Abstands;
Fig. 4 ein Selektieren von möglichen Abstandswerten zum Bestimmen eines Abstands;
Fig. 5 einen Ablaufplan des erfindungsgemäßen Verfahrens;
Fig. 6 einen weiteren Ablaufplan des erfindungsgemäßen Verfahrens.

### Ausführungsbeispiele

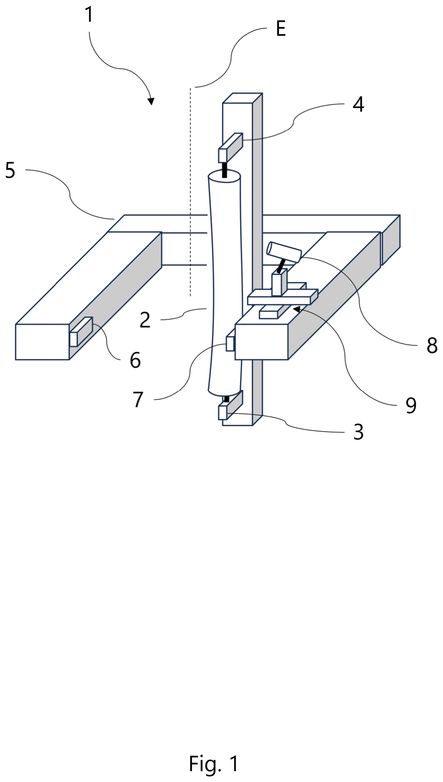

Fig. 1 zeigt eine Vorrichtung 1 zum Messen von Form, Lage oder Dimension eines Werkstücks 2, auf der das erfindungsgemäße Verfahren ausführbar ist. Das in Fig. 1 gezeigte Werkstück 2 ist ein wellenartiges Werkstück. Das Werkstück 2 ist zwischen zwei Halterungen 3, 4 drehbar eingespannt, wobei die Drehung um eine Achse parallel zu einer Richtung E erfolgt. Alternativ kann das Werkstück 2 auch nur in einer Halterung drehbar eingespannt sein. Ein U-förmiger Träger 5 umgreift das Werkstück 2. Auf dem Träger 5 sind eine Sensoreinheit 6 und eine Beleuchtungseinheit 7 angebracht. Der Träger 5 ist entlang der Richtung E verschiebbar. Die Sensoreinheit 6, beispielsweise eine flächige CCD-Kamera oder eine Zeilenkamera, befindet sich auf der Seite des Werkstücks 2, die gegenüber der Beleuchtungseinheit 7 liegt. Ein Abstandssensor 8 ist auf dem Träger 5 mit einer Halterungseinheit angebracht. Die Halterungseinheit kann statisch sein. Optional kann die Halterungseinheit als eine Verschiebe- und Dreheinheit 9 ausgeführt sein und der Abstandssensor 8 somit verschiebbar und drehbar sein. In dem in Fig. 1 dargestellten Ausführungsbeispiel ist die Halterungseinheit als Verschiebe- und Dreheinheit 9 ausgeführt.

Zum Ausführen des erfindungsgemäßen Verfahrens nach Anspruch 1 sind die Sensoreinheit 6 und die Beleuchtungseinheit 7 nicht erforderlich.

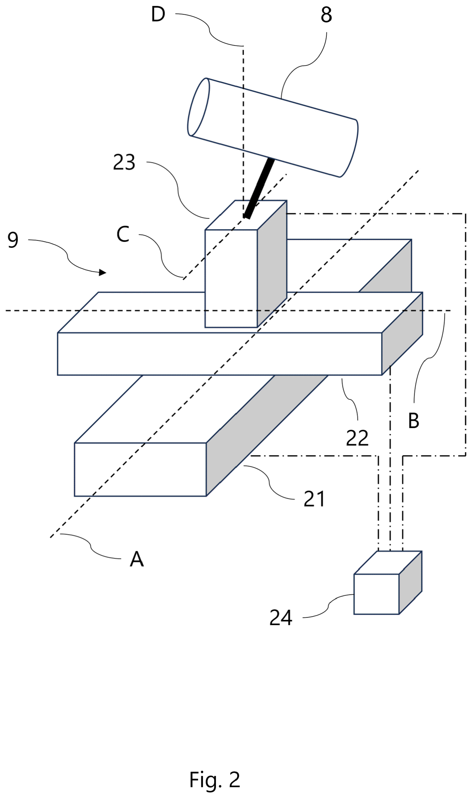

Fig. 2 zeigt die Halterungseinheit mit dem angebrachten Abstandssensor 8, wobei die Halterungseinheit in diesem Ausführungsbeispiel als Verschiebe- und Dreheinheit 9 ausgeführt ist. Die Verschiebe- und Dreheinheit 9 umfasst ein Verschiebeelement 21, ein Verschiebeelement 22 und ein Drehelement 23. Das Verschiebeelement 22 ist auf dem Verschiebeelement 21 angebracht und entlang der Richtung A verschiebbar. Das Verschiebeelement 22 ist im Wesentlichen senkrecht zur Richtung A angebracht. Das Drehelement 23 ist auf dem Verschiebeelement 22 angebracht und entlang der Richtung B verschiebbar. Richtung A und Richtung B stehen im Wesentlichen senkrecht zueinander und auch im Wesentlichen senkrecht zur Richtung E. Der Abstandssensor 8 ist auf dem Drehelement 23 angebracht und um die Achse C und die Achse D drehbar. Die Achse C ist im Wesentlichen parallel zur Richtung A. Die Achse D ist im Wesentlichen parallel zur Richtung E. Somit ist der Abstandssensor 8 entlang Richtung A und Richtung B verschiebbar und um Achse C und Achse D drehbar. Verschiebeelement 21, Verschiebeelement 22 und Drehelement 23 werden von einer Steuereinheit 24 angesteuert.

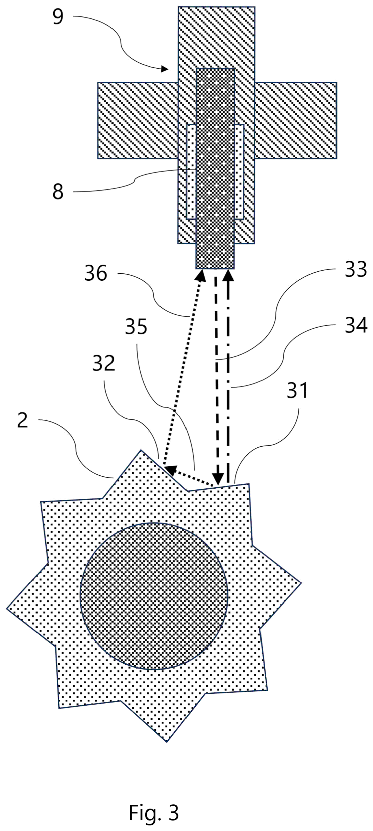

Fig. 3 zeigt den Abstandssensor 8 auf der Verschiebe- und Dreheinheit 9 beim Messen eines Abstands zwischen dem Abstandssensor 8 und einer Oberflächenposition 31 auf der Oberfläche des Werkstücks 2. Der Abstandssensor 8 führt eine optische Messung des Abstands aus. Die Oberflächenposition 31 wird vom Abstandssensor 8 mit einem Lichtstrahl 33 beaufschlagt. Das an der Oberflächenposition 31 reflektierte Licht erreicht im Lichtstrahl 34 wieder den Abstandssensor 8. Ein Teil des an der Oberflächenposition 31 reflektierten Lichts erreicht in einer Mehrfachreflexion nach Reflexion an einer Oberflächenposition 32 in den Lichtstrahlen 35 und 36 ebenfalls den Abstandssensor 8. Somit gelangt Licht auf zwei Pfaden sowohl über den Lichtstrahl 34 als auch über die Lichtstrahlen 35 und 36 in den Abstandssensor 8. Die optischen Weglängen der zwei Pfade sind unterschiedlich. Somit liegt eine Mehrdeutigkeit beim Bestimmen des Abstands vor.

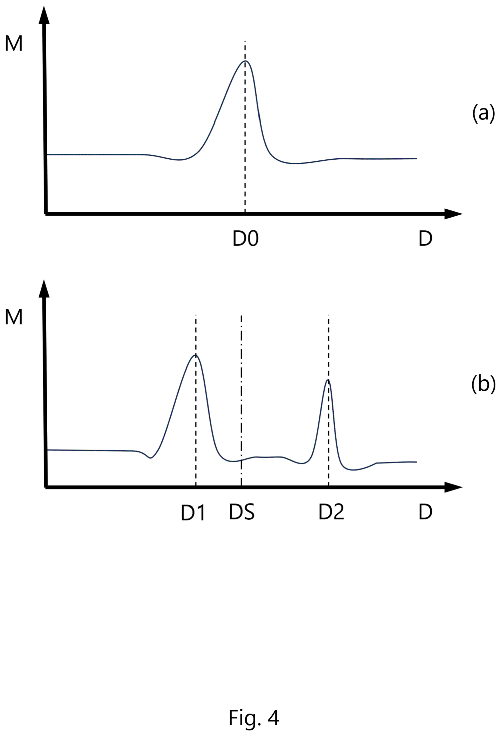

Fig. 4 (a), (b) zeigen Messdaten zum Bestimmen eines Abstands zwischen dem Abstandssensor 8 und einer Oberflächenposition auf der Oberfläche des Werkstücks 2. Die Messdaten sind als Folge von Messwerten M als Funktion eines Abstandswerts D aufgetragen. Die Folge von Messwerten M kann beispielsweise von einem Spektrometersensor ausgegeben werden, wenn ein Abstandssensor nach dem CCS-Prinzip verwendet wird. In diesem Fall lässt sich der Abstandswert D unter Verwendung der Dispersion des Linsensystems aus der Wellenlängenkalibration des Spektrometersensors berechnen.

Fig. 4 (a) zeigt eine Folge von Messwerten M, wenn keine Mehrdeutigkeit beim Bestimmen des Abstands vorliegt. Die Folge von Messwerten M weist ein lokales Extremum in Form eines lokalen Maximums bei einem Abstandswert D0 auf. Somit ist der Abstand zwischen der Oberflächenposition und dem Abstandsensor 8 eindeutig bestimmbar. Der Abstandswert DO wird als Abstand zwischen der Oberflächenposition und dem Abstandsensor 8 selektiert.

Fig. 4 (b) zeigt eine Folge von Messwerten M, wenn eine Mehrdeutigkeit beim Bestimmen des Abstands vorliegt, wie sie beispielsweise bei der in Fig. 3 gezeigten Anordnung auftreten kann. Die Folge von Messwerten M weist zwei lokale Extrema in Form lokaler Maxima auf. Das erste lokale Maximum bei einem Abstandswert D1 entspricht einem Pfad über den Lichtstrahl 33 und den Lichtstrahl 34. Das zweite lokale Maximum bei dem Abstandswert D2 entspricht einem Pfad über den Lichtstrahl 33, den Lichtstrahl 35 und den Lichtstrahl 36 und ist eine Folge einer Mehrfachreflexion am Werkstück 2. Ein Sollwert DS wird aus den Solldaten des Werkstücks 2 berechnet, insbesondere aus den Konstruktionsdaten des Werkstücks, beispielsweise CAD-Daten. Der Abstandswert D1 liegt näher an dem Sollwert DS als der Abstandswert D2.

Daher wird der Abstandswert D1 als der Abstand zwischen der Oberflächenposition 31 und dem Abstandsensor 8 selektiert.

In Fig. 4 (b) werden beispielhaft zwei lokale Extrema in Form lokaler Maxima bei Abstandswerten D1 und D2 gezeigt. Weitere lokale Extrema können auftreten, sodass die Folge von Messwerten M lokale Maxima oder Minima bei Abstandswerten D1, D2, ... DN aufweisen kann.

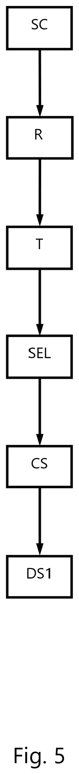

Fig. 5 zeigt das erfindungsgemäße Verfahren in einem Ablaufplan. Die Steuereinheit 24 steuert den Abstandssensor 8 in die Konfiguration SC, wobei die Konfiguration SC eine Abstandssensorposition und einen Abstandssensorwinkel umfasst. Im Verfahrensschritt R werden Messdaten des Abstandssensors 8 zum Bestimmen des Abstands zwischen dem Abstandssensor 8 und einer Oberflächenposition 31 auf der Oberfläche des Werkstücks 2 ausgelesen. Im folgenden Verfahrensschritt T werden die Messdaten auf ein Vorliegen einer Mehrdeutigkeit des Bestimmens des Abstands geprüft. Im anschließenden Verfahrensschritt SEL wird entweder der eindeutig bestimmbare Abstandswert oder einer der möglichen Abstandswerte als der Abstand selektiert. Anschließend wird ein Koordinatensatz CS der Oberflächenposition 31 aus dem Abstand, der Abstandssensorposition und dem Abstandssensorwinkel berechnet und ein erster Datensatz DS1 aus dem Koordinatensatz CS generiert.

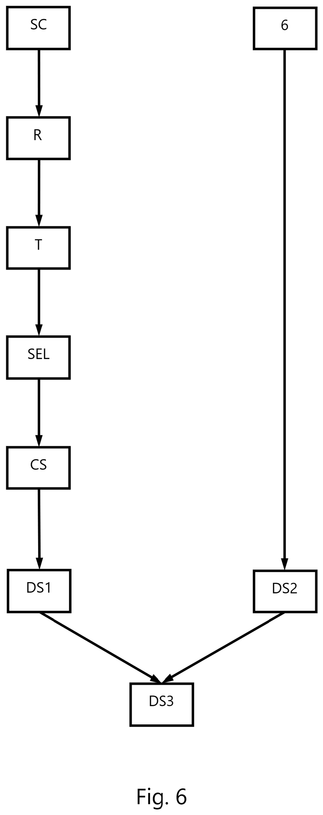

Fig. 6 zeigt das erfindungsgemäße Verfahren mit einem zusätzlichen Aufnehmen eines Schattenbilds mit der Sensoreinheit 6. Die Beleuchtungseinheit 7 beleuchtet das Werkstück 2, und die Sensoreinheit 6 nimmt ein Schattenbild des Werkstücks 2 auf. Aus dem Schattenbild wird ein zweiter Datensatz DS2 generiert. Der zweite Datensatz DS2 enthält Information über Form, Lage oder Dimension des Werkstücks 2, die aus dem Schattenbild berechenbar sind, beispielsweise den Durchmesser des Werkstücks 2.

Die Berechnung des ersten Datensatzes DS1 erfolgt gemäß der Beschreibung von Fig. 5.

Der erste Datensatz DS1 und der zweite Datensatz DS2 werden zu einem dritten Datensatz DS3 kombiniert, wobei der dritte Datensatz DS3 mindestens ein Merkmal von Form, Lage oder Dimension des Werkstücks 2 beschreibt.

Der erste Datensatz DS1 kann insbesondere Informationen über mindestens ein Merkmal von Form, Lage oder Dimension des Werkstücks 2 umfassen, die in dem aus dem mindestens einen Schattenbild generierten zweiten Datensatz DS2 nicht enthalten sind. Der erste Datensatz DS1 kann insbesondere Informationen über eine Oberflächenposition in einem konkaven oder hinterschnittenen Bereich des Werkstücks 2 umfassen.

Das erfindungsgemäße Verfahren ist nicht auf die gezeigten Ausführungsbeispiele beschränkt.

## Patentansprüche

1. Verfahren zum Messen von mindestens einem Merkmal von Form, Lage oder Dimension eines drehbar eingespannten Werkstücks (2), umfassend:
Aufnehmen von Messwerten zum Generieren eines ersten Datensatzes (DS1), der das mindestens eine Merkmal von Form, Lage oder Dimension des Werkstücks (2) beschreibt, umfassend:
• Bereitstellen eines Abstandssensors (8) in einer Abstandssensorposition und einem Abstandssensorwinkel;
• Auslesen (R) von Messdaten des Abstandssensors (8) zum Bestimmen des Abstands zwischen dem Abstandssensor (8) und einer Oberflächenposition (31) auf der Oberfläche des Werkstücks (2);
• Bestimmen des Abstands zwischen dem Abstandssensor (8) und der Oberflächenposition (31) aus den Messdaten;
• Berechnen eines Koordinatensatzes (CS) der Oberflächenposition (31) aus dem Abstand, der Abstandssensorposition und dem Abstandssensorwinkel;
• Generieren des ersten Datensatzes (DS1) aus dem Koordinatensatz (CS) der Oberflächenposition (31);
**dadurch gekennzeichnet, dass** das Bestimmen des Abstands folgende Schritte umfasst:
• Prüfen (T) der Messdaten auf ein Vorliegen einer Mehrdeutigkeit des Bestimmens des Abstands, wobei bei Vorliegen der Mehrdeutigkeit mehrere mögliche Abstandswerte des Abstands bestimmbar sind,
• Bestimmen eines eindeutig bestimmbaren Abstandswerts sowie Selektieren (SEL) des eindeutig bestimmbaren Abstandswerts als den Abstand
oder
Bestimmen von mehreren möglichen Abstandswerten sowie Selektieren (SEL) des möglichen Abstandswerts, der am nächsten bei einem Sollwert (DS) liegt, als den Abstand.

2. Verfahren nach Anspruch 1,
wobei die Messdaten als Folge von Messwerten vorliegen,
wobei die Folge von Messwerten ein lokales Extremum oder mehrere lokale Extrema aufweist,
wobei bei Aufweisen mehrerer lokaler Extrema die Mehrdeutigkeit der Bestimmung des Abstands vorliegt,
wobei aus dem lokalen Extremum der eindeutig bestimmbare Abstandswert bestimmbar ist oder aus den mehreren lokalen Extrema die mehreren möglichen Abstandswerte bestimmbar sind.

3. Verfahren nach Anspruch 1 oder 2, wobei der Sollwert aus Solldaten des Werkstücks (2), der Abstandssensorposition und dem Abstandssensorwinkel bestimmt wird.

4. Verfahren nach Anspruch 1 oder 2, wobei der Sollwert aus einem Mittelwert von Koordinatensätzen von weiteren Oberflächenpositionen, die benachbart zur Oberflächenposition (31) sind, der Abstandssensorposition und dem Abstandssensorwinkel bestimmt wird.

5. Verfahren nach einem der vorangegangenen Ansprüche, wobei der Abstandssensor (8) eine kontaktlose Messung des Abstands, insbesondere eine optische Messung des Abstands, ausführt.

6. Verfahren nach Anspruch 5, wobei der Abstandssensor (8) ein konfokaler chromatischer Abstandssensor ist.

7. Verfahren nach einem der vorangegangenen Ansprüche, wobei der Abstandssensor (8) verschiebbar und/oder drehbar in eine Abstandssensorposition und einen Abstandssensorwinkel steuerbar ist.

8. Verfahren nach einem der vorangegangenen Ansprüche, außerdem umfassend Drehen des Werkstücks (2) um eine Drehachse des drehbar eingespannten Werkstücks (2) und/oder Verschieben des Abstandssensors (8) in einer Richtung entlang der Drehachse.

9. Verfahren nach einem der vorangegangenen Ansprüche, zusätzlich umfassend:
Beleuchten des Werkstücks (2) mit einer Beleuchtungseinheit (7);
mindestens einfaches Aufnehmen eines von der Beleuchtungseinheit (7) erzeugten Schattenbilds des Werkstücks (2) mit einer Sensoreinheit (6);
Generieren eines zweiten Datensatzes (DS2) aus dem mindestens einfachen Aufnehmen des Schattenbilds;
Kombinieren des ersten Datensatzes (DS1) und des zweiten Datensatzes (DS2) zu einem dritten Datensatz (DS3), wobei der dritte Datensatz (DS3) das mindestens eine Merkmal von Form, Lage oder Dimension des Werkstücks (2) beschreibt.

10. Verfahren nach Anspruch 9,
wobei das Werkstück (2) eine Referenzfläche umfasst,
wobei die Referenzfläche in dem von der Sensoreinheit (6) aufgenommenen Schattenbild des Werkstücks (2) sichtbar ist und eine Position auf der Referenzfläche als die Oberflächenposition (31) selektiert wird,
zusätzlich umfassend ein Berechnen einer Relation von Abstandssensor (8) und Sensoreinheit (6) aus dem im dritten Datensatz (DS3) beschriebenen mindestens einen Merkmal von Form, Lage oder Dimension des Werkstücks (2).

11. Vorrichtung zum Messen von mindestens einem Merkmal von Form, Lage oder Dimension eines drehbar eingespannten Werkstücks (2), umfassend einen Abstandssensor (8) und eine Steuereinheit (24), auf der das Verfahren nach einem der vorangegangenen Ansprüche ausführbar ist.

12. Vorrichtung nach Anspruch 11, wobei der Abstandssensor (8) verschiebbar und/oder drehbar ist.

13. Vorrichtung nach Anspruch 11 oder 12, zusätzlich umfassend eine Beleuchtungseinheit (7) und eine Sensoreinheit (6).
